# EUROPEAN PATENT SPECIFICATION

(11) **EP 0 414 566 B1**
(45) Date of publication and mention of the grant of the patent: **19.06.1996**
(21) Application number: 90309328.4
(22) Date of filing: 24.08.1990
(51) Int. Cl.: G06F 3/033, G06F 15/02

(54) **Portable graphic computer apparatus**
Tragbarer graphischer Rechner
Ordinateur graphique portable

(30) Priority: 25.08.1989 JP 219820/89
(43) Date of publication of application: 27.02.1991
(73) Proprietor: SONY CORPORATION, Tokyo (JP)
(72) Inventor: Yasuhara, Nae, c/o Patents Division, Shinagawa-ku, Tokyo 141 (JP); Kashii, Masaharu, c/o Patents Division, Shinagawa-ku, Tokyo 141 (JP); Marusawa, Miyuki, c/o Patents Division, Shinagawa-ku, Tokyo 141 (JP); Iizuka, Yoshio, c/o Kokoku Rubber Industry Co Ltd., Taito-ku, Tokyo (JP); Murayama, Satoru, c/o Kokoku Rubber Ind. Co Ltd., Taito-ku, Tokyo (JP)
(74) Representative: Cotter, Ivan John

(56) References cited:
- EP-A- 0 088 565
- DE-A- 2 405 882
- RESEARCH DISCLOSURE. vol. 298, February 1989, NO. 29845, NEW YORK, NY, US 'Technique for Selection of Sound Features'

## Description

This invention relates to portable graphic computer apparatus.

To create a picture, children customarily draw the picture on drawing paper with crayons and/or coloured pencils, whereby a mistake in the picture cannot easily be corrected. Also, there is a restriction on the extent to which children can freely express their ideas by drawing pictures in this way because the number of sheets of drawing paper available will generally be restricted.

Therefore, an image forming apparatus has been proposed in which a tablet having, for example, a coordinates detecting means or apparatus, a personal computer having software for processing inputted coordinates, and a television monitor for displaying a video signal generated by the personal computer, are combined to display a locus drawn on the tablet on a picture screen of the television monitor. In this case, the picture displayed on the monitor can be corrected with ease, and the user can draw pictures freely over and over.

An electronic picture drawing apparatus is disclosed, for example, in U S Patent No. US-A-4 764 763. In this picture drawing apparatus, coordinates are inputted by moving a cursor on a display panel by turning right and left knobs. (Accordingly, the fundamental idea of this apparatus is different from that of an embodiment of the present invention described in detail hereinbelow.)

However, since the tablet having the coordinates detecting means and the personal computer having the predetermined software are independently provided as described above, the overall arrangement of the apparatus becomes large in size and the interconnection thereof becomes complicated. This results in the disadvantage that children cannot use the apparatus with ease.

Moreover since electronic, relatively expensive image forming apparatus is utilised, it is desirable that more sophisticated functions than that of drawing also be provided.

Preferred embodiments of the invention described in detail hereinbelow provide an improved portable graphic computer apparatus which can eliminate or at least reduce at least some of the above-mentioned shortcomings and disadvantages encountered with the prior art. More specifically, substantially the entire apparatus is accommodated within a cabinet and is simplified so that the apparatus is highly suited to being used by children. Also, the mechanical construction can be simplified in arrangement and other functions can be extended additionally.

In the preferred embodiments, the speaker emanates a sound whose musical scale and sound volume can be changed in response to coordinates inputted to the tablet, thus making it possible for the user to listen to a sound as well as to draw a picture. Further, the user can play a melody or the like with stress since the sound volume and musical scale are varied in response to changing of the input coordinates in one axial direction and in another axial direction, respectively.

Other advantageous features of the preferred embodiments are that: an alarm sound is generated so that the user is warned not inadvertently to leave a power switch of the apparatus in its ON state; demonstration video data is formed after a predetermined period of time so that the apparatus is suitable for being exhibited in a shop front for demonstration purposes; and a tracing sheet can be provided on the tablet with ease.

European Patent Application Publication No. EP-A-O 088 565 discloses a portable graphic computer apparatus comprising:
a tablet for inputting coordinates;
a graphic display device for displaying coordinate values obtained by digitization of positions designated by the tablet;
a buzzer; and
a cabinet accommodating therein the tablet and the buzzer.

Research Disclosure, vol. 298, February 1989, No. 29845, New York, USA, "Technique for Selection of Sound Features", discloses an audio-visual approach for selection of sound with a pointing device. As the user moves a "scroll box" on a sliding scale, the user hears the sound change and sees the chosen frequency.

According to the present invention there is provided a portable graphic computer apparatus comprising:
(a) a tablet for inputting coordinates;
(b) detecting means for detecting coordinate data corresponding to coordinates inputted via the tablet;
(c) image data forming means for forming image data from coordinate data detected by the detecting means;
(d) a memory for storing said image data;
(e) video signal generating means for generating a video signal from said image data;
(f) a sound source;
(g) a speaker connected to the sound source; and
(h) a cabinet accommodating therein at least one of the above elements from the tablet to the speaker;

wherein the sound source is responsive to the detected coordinate data such that the volume of the sound generated by the sound source is successively changed in accordance with a change of input coordinates to the tablet in one axial direction and the pitch of the sound generated by the sound source is successively changed in accordance with a change of input coordinates in another axial direction.

The invention will now be further described, by way of illustrative and non-limiting example, with reference to the accompanying drawings, in which like references identify the same or similar parts throughout, and in which:
Figure 1 is a perspective view illustrating the system arrangement of a portable graphic computer apparatus according to an embodiment of the invention;
Figure 2 is a plan view of a portable graphic computer embodying the invention for use in the apparatus of Figure 1;
Figures 3 and 4 are respective exploded perspective views of the portable graphic computer;
Figure 5 is a block circuit diagram of the portable graphic computer;
Figures 6A, 6B and 7 to 10 are schematic diagrams used to explain operation of the embodiment; and
Figures 11 and 12 are perspective views of respective further embodiments of the invention.

A description will now be given, with reference to the accompanying drawings, of preferred embodiments of the invention each in the form of a portable graphic computer or portable graphic computer apparatus which can be used by children to draw pictures.

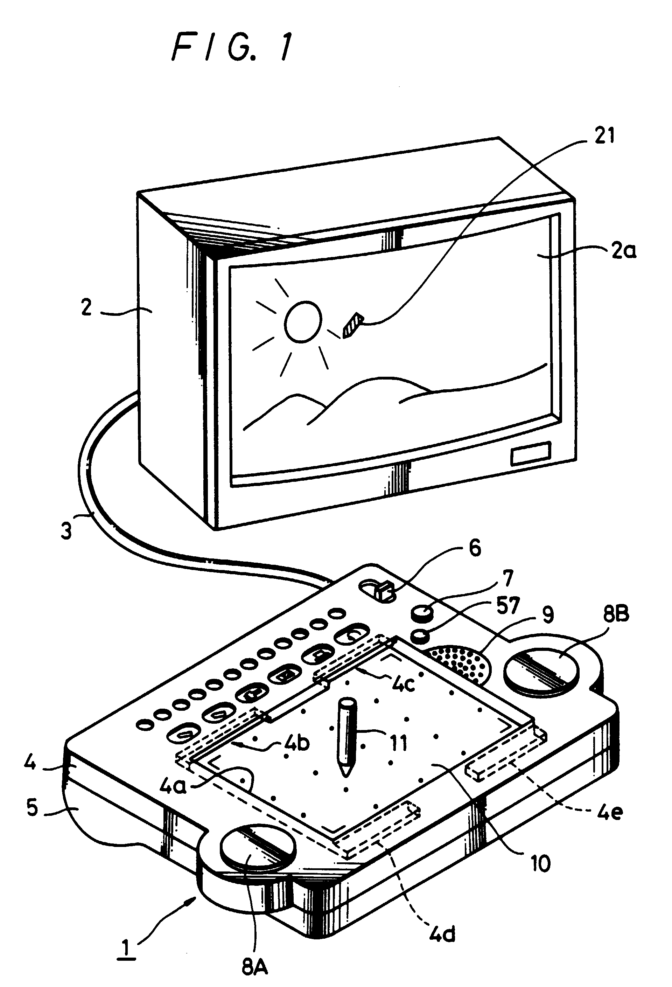

Figure 1 shows the overall system arrangement of a first embodiment. The apparatus comprises a portable graphic computer 1 and a monitor 2 having a video signal input terminal. A video signal output terminal (described below) of the graphic computer 1 and the video signal input terminal of the monitor 2 are coupled via a video cable 3. A cabinet of the graphic computer 1 is formed of an upper casing 4 and a lower casing 5. A power switch 6, a clear button 7, a sound button 57, and a sound emanating portion 9 which covers a speaker, are provided on a right end portion of the upper casing in, and executing buttons 8A and 8B are provided on two side end portions of the upper casing in. The power switch 6, clear button 7, sound button 57 and executing buttons 8A, 8B are respective independent mechanical switches.

A rectangular cut-away or recessed portion 4a is formed through a centre portion of the upper casing 4, and a tablet 10 is provided beneath the cut-away portion 4a to act as a coordinate input surface of a pressure sensitive type position sensing means or apparatus. Slots 4b, 4c, 4d and 4e are formed through the cut-away portion 4a at portions where the cut-away portion 4a contacts the tablet 10, as shown in Figure 1. As described below, the slots 4b to 4e are used to attach a tracing sheet to the tablet 10.

The general operation of the apparatus will now be described. When a user draws a locus on the tablet 10 by lightly touching the tablet 10 with an attachment or accessory pen 11 made of a plastics material, or with a fingertip or the like, while pushing the executing button 8A or 8B, a pen-shaped cursor 21 is displayed on a picture screen 2a of the monitor 2, and the cursor 21 moves in tandem with the locus of the pen, fingertip or the like to display the locus as an image. (A respective executing button 8A, 8B is provided at each side of the tablet 10 so that both left-handed and right-handed children can operate the graphic computer 1 with ease.) Further, if the clear button 7 is depressed, the video image on the picture screen 2a will be erased completely and the graphic computer 1 stands by in a picture drawing mode.

If the user depresses the sound button 57 once whereby the tablet 10 beneath it is pushed, the apparatus causes a predetermined sound to be emanated from the sound emanating portion 9. If the user depresses the sound button 57 one more time, the sound emanating portion 9 is inhibited from emanating sound.

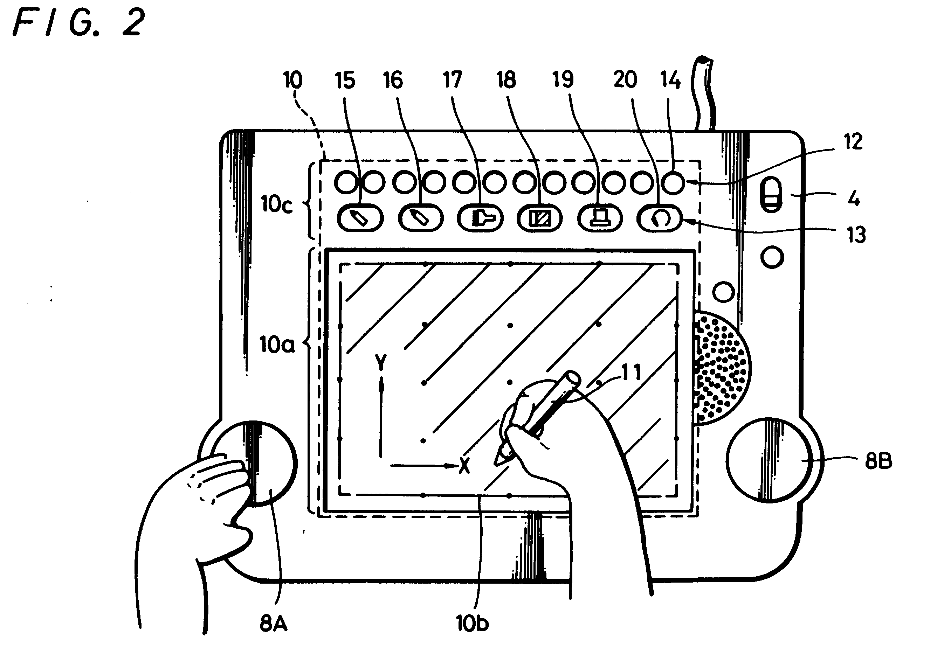

The coordinate input surface of the tablet 10 is, as shown in Figure 2, divided into a picture-drawing area 10a and a menu selecting area 10c, and a portion (hatched area in Figure 2) of the picture-drawing area 10a encircled by a bracket and represented by solid circles at a predetermined pitch forms a picture-making area 10b. The aspect ratio of the picture-making area 10b is made coincident with the aspect ratio (3:4) of the picture screen of a standard monitor. A pixel ratio that is a ratio between resolution in the longitudinal direction (Y-direction) and resolution in the lateral direction (X-direction) of the input coordinates of the tablet 10 is made coincident with the ratio of pixels of the standard monitor. Therefore, in this embodiment, there is the advantage that, if the user draws a locus of a circle on the picture-making area 10b precisely, a picture of a circle is also accurately displayed on the picture screen 2a of the monitor 2.

Sound is emanated when the user pushes the picture-making area 10b with a fingertip or the like, the sound volume increasing successively with the positioning of the fingertip or the like along the X-axis of the input coordinates (X, Y). Also, the musical scale (pitch or frequency) of the emanated sound increases successively with the positioning of the fingertip or the like along the Y-axis (a range of about three octaves at maximum).

The menu selecting area 10c of the tablet 10 is divided to provide a colour selecting area 12 and a tool selecting area 13. The upper casing in has twelve bores or round openings 14 at the colour selecting area 12, and six openings or slots 15 to 20 at the tool selecting area 13. If the user lightly touches the tablet 10 through one of the twelve round openings 14 with the attachment pen 11 or the like, a respective one of twelve colours (black/blue/green/yellow/red/white, etc.,) will be designated. If the user lightly touches the tablet 10 through the six slots 15 to 20, then a respective one of five kinds of tool (bold line, very bold line, brush, eraser, stamp) and a cancel function will be designated. The one of the twelve round openings 14 and six slots 15 to 20 that has been selected can be discriminated on the basis of the input coordinates to the tablet 10.

As described above, according to this embodiment, colour, tool and cancel functions are identified on the basis of input coordinates, and thus the mechanical construction can be simplified. Further, there is the advantage that various other functions can additionally be provided simply by sub-dividing or extending the menu selecting area 10c.

For convenience of explanation, the twelve round openings 14 will be referred to hereinafter as colour selecting buttons 14 and the six slots 15 to 20 will be referred to hereinafter as the bold line button 15, the very bold line button 16, the brush button 17, the eraser button 18, the stamp button 19 and the cancel button 20, respectively. (The buttons 14 and 15 to 20 can be collectively considered as menu selecting buttons.) The functions of the buttons 15 to 20 are as follows:
1 bold line button 15 ... to draw a free curve as a bold line of 2 x 2 dots;
2 very bold line button 16 ... to draw a free curve by 6 x 6 columnar dots;
3 brush button 17 ... to cause the cursor 21 within the picture screen 2a of the monitor 2 to be shaped as a brush to paint out (fill in) a closed area in a designated colour;
4 eraser button 18 ... to cause the cursor 21 within the picture screen 2a of the monitor 2 to be shaped as an eraser to erase a drawn figure;
5 stamp button 19 ... to form a video image of a pattern, selected from 28 kinds of stamps each formed of 16 x 16 dots, at a desired position; and
6 cancel button 20 ... to return to the picture of just one procedure before. (One procedure means a process which is finished during depression of the executing button 8A or 8B.)

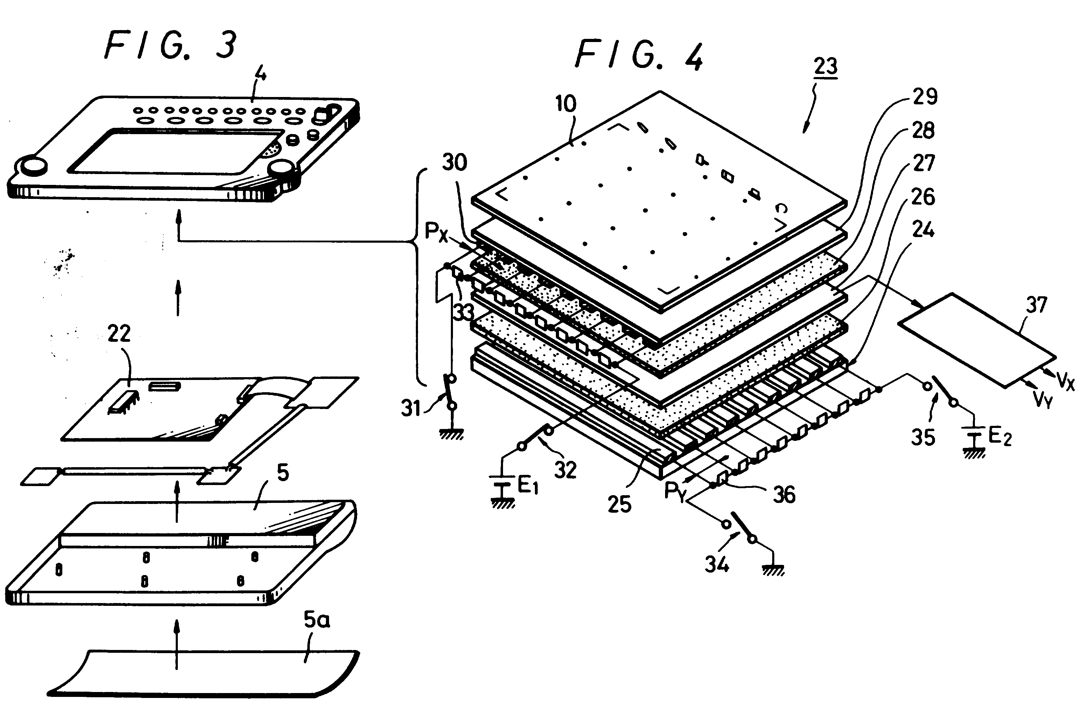

The interior structure of the graphic computer 1 shown by way of example in Figures 1 and 2 is represented in Figures 3 and 4 (the scale of Figure 4 being enlarged with respect to Figure 3). The upper and lower casings 4 and 5 have sandwiched therebetween a pressure sensitive position sensing means or apparatus 23 including the tablet 10 and a printed circuit board 22. The lower casing 5 accommodates therein a battery cell or a rechargeable battery as a power source; and is provided with a battery cover 5a. The graphic computer 1 of this embodiment may be driven by an AC power source adapter or the like.

The arrangement of the pressure sensitive position sensing means 23 will now be described with reference to Figure 4. Referring to Figure 4, thin strip electrodes 25 are formed on a first insulating substrate 24 at a pitch Py, and a first pressure sensitive conductive sheet 26 made of a pressure sensitive conductive rubber, a conductive plate 27, a second pressure sensitive conductive sheet 28 made of a pressure sensitive conductive rubber, and a second insulating substrate 29 having thin strip electrodes 30 formed on a bottom surface thereof at a pitch Px, are sequentially laminated on the first insulating substrate 24. The tablet 10 is mounted on the second insulating substrate 29. The conductive plate 27, second insulating substrate 29 and the tablet 10 are all flexible. The pitch Px assumes resolution in the X-direction of the input coordinates of this embodiment, and the pitch Py assumes resolution in the Y-direction thereof. The ratio Px/Py is made to be the same as the pixel ratio of the minimum pixels of a picture screen of a standard monitor. The values of the pitches or resolutions Px and Py are, for example, about 0.3 mm.

The thin strip electrode 30 at one end or side in the lateral direction of the second insulating substrate 29 is earthed (grounded) through a switch circuit 31, while the thin strip electrode 30 at the other end or side is connected to a DC voltage source having a voltage E1 through a switch circuit 32. The thin strip electrodes 30 are connected sequentially by resistors 33 having the same resistance value. Similarly, the thin strip electrode 25 at one end or side in the longitudinal direction of the second insulating substrate 24 is earthed (grounded) through a switch circuit 34, while the thin strip electrode 25 at the other end or side is connected to a DC voltage source having a voltage E2 through a switch circuit 35. The thin strip electrodes 25 are connected sequentially by resistors 36 having the same resistance value.

When the user pushes (applies pressure to) the tablet 10 at a particular position, the pressure sensitive conductive sheets 26 and 28 are conductively connected at that position. Thus, when the pair of switch circuits 31 and 32 are closed the conductive plate 27 derives a voltage corresponding to the coordinate in the X-direction, whereas when the pair of switch circuits 34 and 35 are closed the conductive plate 27 derives a voltage corresponding to the coordinate in the Y-direction. den the pair of switch circuits 31, 32 or the pair of switch circuits 34, 35 are alternately closed and the voltages generated at the conductive plate 27 are held, a coordinate detecting section 37 generates voltages (Vx, Vy) corresponding to the input coordinates (X, Y) of the tablet 10.

A more detailed description of the pressure sensitive position sensing means 23 shown in the example of Figure 4 and a description of a modified form thereof are set out in Japanese Patent Publication No. JP-A-58-90235. (It should be noted, however, that the coordinate detecting means or device employed in apparatus embodying the invention is not limited to the pressure sensitive type.)

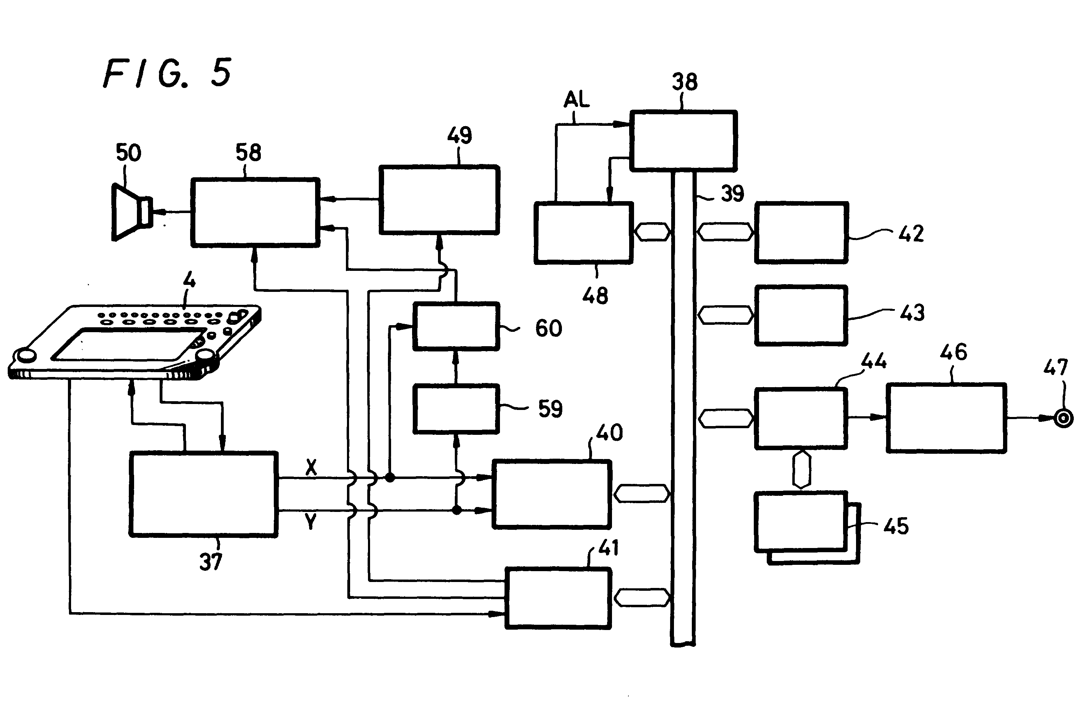

Figure 5 shows the circuit arrangement of the graphic computer 1 of this embodiment. The circuit arrangement comprises a central processing unit (CPU) 38, a system bus 39 (which comprises a data bus, an address bus and a control bus) for the CPU 38, a read only memory (ROM) 42 for storing therein a program for the CPU 38 (and video data in a demonstration mode described below), and a random access memory (RAM) 43. The ROM 42 and RAM 43 are connected to the system bus 39. The CPU 38 is supplied with the voltages (VX, Vy) corresponding to the input coordinates (X, Y) from the coordinate detecting section 37 via an analog-to-digital (A/D) converting section 40. If the voltages (VX, Vy) correspond to coordinates (X, Y) in the picture-making area 10b of the tablet 10, the coordinates (X, Y) are written into the RAM 43. If the voltages (VX, Vy) correspond to coordinates (X, Y) in the menu selecting area 10c (see Figure 2) of the tablet 10, the CPU 38 identifies which one of the buttons 14 and 15 to 20 has been depressed on the basis of the coordinates (X, Y). Colour data or tool data corresponding to the identified button is written into the RAM 43. When the tool buttons 15 to 20 are selected, the CPU 38 will perform the operations corresponding to those tools. The CPU 38 always monitors via an input/output (I/O) interface circuit inl whether the mechanical switches (the clear button 7, the sound button 57 and the executing buttons 8A, 8B shown in Figure 1) are or are not operated.

The circuit arrangement shown in Figure 5 also comprises a video processor (VDP) 44 connected to the system bus 39, a video RAM (VRAM) 45 having a capacity of 2 frames (2 pages), and an NTSC (or PAL) encoder 46. The VDP 44 reads out data of the input coordinates (X, Y) and colour data from the RAM 43 on the basis of commands from the CPU 38 and writes colour video data into the VRAM 45 at a corresponding address thereof. Also, it reads out coiour video data of 1 frame from the VRAM 45 periodically, and supplies same to the encoder 46. The encoder 46 converts the colour video data supplied thereto into a composite video signal CV and supplies the signal CV to a video signal output terminal 47. In this embodiment, since the VRAM 45 has a storage capacity of 2 pages, in a certain procedure (one procedure, as mentioned above, means a process carried out during a period in which the executing button 8A or 8B is operated), the VDP 44 writes and reads video data in the region of, for example, the first page. In the next procedure, after completely moving the video data of the first page into the region of the second page, the VDP 44 writes and reads video data in the region of the second page. If the CPU 38 issues a cancel command to the VDP 44 when the cancel button 20 of the tool selecting area 13 in the tablet 10 is pushed, the VDP 44 again reads the video data in the first page region of the VRAM 45, and writes the video data into the first page region when the CPU 38 is supplied with coordinate data input. This means that the picture on the picture screen 2a of the monitor 2 returns to a picture of one procedure before by operating the cancel button 20. This results in the advantage that, when the user draws a wrong picture in the picture drawing mode, the original picture can be recovered in a one-touch fashion.

The circuit arrangement shown in Figure 5 further comprises a counter 48, an alarm circuit 49, and a speaker 50 provided for the sound emanating section 9 (see Figure 1). The counter 48 keeps counting clock pulses received from the CPU 38 and the count value can be cleared at any time by a clear pulse from the CPU 38. When the count value of the counter 48 reaches a value corresponding to a time of 5 minutes, that is a clear pulse has not been supplied to the counter 48 from the CPU 38 for five minutes, the counter 48 supplies an alarm signal AL to the CPU 38. During the normal drawing mode, the CPU 38 supplies an alarm operation command or signal to the alarm circuit 49 through the I/O interface circuit 41 in response to the alarm signal AL. The alarm circuit 49 comprises a timer, an oscillator, a synthesiser, a power amplifier or the like, and supplies a signal in the form of a predetermined sound, melody or message to the speaker 50 through a switching circuit 58 for two minutes only in response to the alarm operation command from the CPU 38. The counter 48, alarm circuit 49 and speaker 50 are mainly provided in order to generate an alarm sound warning the user not to leave the power switch 6 in its ON state after he has finished using the apparatus.

The voltage Vy generated in the coordinate detecting section 37 is supplied to the switching circuit 58 through a voltage controlled oscillator (VCO) 59 and a variable gain amplifier 60, and the voltage Vx generated in the coordinate detecting section 37 is supplied to a gain control terminal of the variable gain amplifier 60. The CPU 38 changes over the switching circuit 58 through the I/O interface circuit 41.

When the sound button 57 is depressed once, the CPU 38 changes over the switching circuit 58 to permit an output signal of the variable gain amplifier 60 to be fed to the speaker 50. When the sound button 57 is depressed one more time, or when an alarm operation (described below) is to be carried out, the CPU 38 supplies an output signal of the alarm circuit 58 to the speaker 50. Therefore, when the sound button 57 is depressed once (putting the graphic computer into a sound emanating mode) and coordinates (X, Y) are inputted by pushing the tablet 10, the speaker 50 emanates a sound whose sound volume and musical scale (that is, pitch or frequency) change in proportion to the values of the coordinates X and Y.

Alternatively, the musical scale may change in accordance with the X coordinate value and the sound volume may change in accordance with the Y coordinate value. Further, the musical scale or the like may change along a diagonal line of the picture-making area 10b.

When the graphic computer 1 of this embodiment is to be used, it is necessary only, as shown in Figure 1, simply to couple the video signal output terminal of the computer 1 to the video signal input terminal of the monitor 2 via the video cable 3. When the user slides the power switch 6 to its ON-position, the picture screen 2a of the monitor 2 displays thereon for a predetermined period of time a demonstration display which teaches the user an example of how to use the graphic computer 1. More specifically, a pen is displayed as a cursor on the picture screen 2a to draw a predetermined picture or an eraser is displayed as a cursor thereon to erase the picture, whereby the user can understand how to use the graphic computer 1.

A demonstration display program is written in the ROM 42 and includes colour data, tool data and a series of data of the input coordinates (X, Y) or the like. The CPU 38 sequentially reads these data and moves them to the RAM 43 and the VDP 44 produces video data corresponding to the data of the RAM 43, whereby a demonstration display mode is carried out as though the user has actually drawn a locus on the tablet 10. This results in the substantial advantage that the capacity that the demonstration display program takes up in the ROM 42 can be relatively reduced.

If, during the demonstration display mode, the user operates the clear button 7, the sound button 57 or either of the executing buttons 8A and 8B or if the user inputs coordinates to the tablet 10 (including the menu selecting area 10c), the graphic computer 1 of this embodiment is set into the picture drawing mode, whereby the picture displayed on the picture screen 2a of the monitor 2 is completely erased and the graphic computer 1 is set in the standby mode awaiting input from the user. After the user designates a colour by pushing a colour button 14 and a tool by pushing the bold line button 15 or the very bold line button 16 with the accessory pen 11, fingertip or the like, if the user then freely draws a locus by lightly touching the picture making area 10b with the accessory pen 11 whilst the executing button 8A or 8B is depressed, a figure similar to the locus, with the designated colour and thickness, can be drawn on the picture screen 2a of the monitor 2 by the cursor 21. If the same operation is performed without depressing the executing button 8A or 8B, the cursor 21 will move (in the background of any previously drawn picture) on the picture screen 2a. Thus, the locus of the cursor 21 is not displayed as a picture until the executing button 8A or 8B is operated. Accordingly, the position of the cursor can be determined precisely when the user moves, for example, from a certain stop position in the drawing to a subsequent stop position.

If the graphic computer is set into the sound emanating mode by operating the sound button 57, when the user lightly touches the picture-making area 10b of the tablet 10 with a fingertip or the like the speaker 50 successively emanates sound in response to the coordinates (X, Y). This results in the advantage that the user can enjoy the sound he thereby generates. As explained above, the sound volume and the musical scale (pitch) change in proportion to the coordinates X and Y, whereby the user can play a melody or the like.

If the user depresses the brush button 17 in the menu selecting area 10c, the cursor 21 is shaped as a brush and, when the user lightly touches the picture making area 10b with the accessory pen 11 or the like, the user can paint out (fill in) with a designated colour the interior of a closed figure (circle, rectangle or the like) near the locus of the brush-shaped cursor within a previously drawn picture.

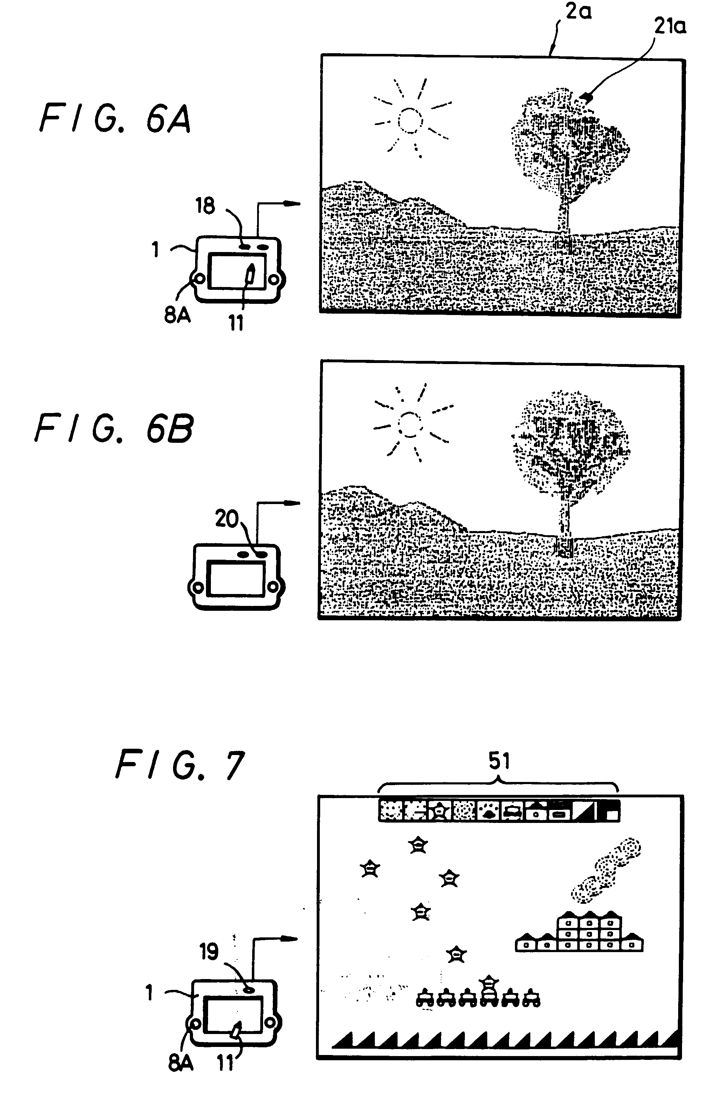

If the user depresses the eraser button 18 in the menu selecting area 10c and lightly touches the picture-making area 10b with the accessory pen 11 or the like, an eraser-shaped cursor 21a is displayed in the background of a previously drawn picture on the picture screen 2a of the monitor 2 shown in Figure 6A and, when the user depresses the executing button 8A or 8B while moving the attachment pen 11 or the like, the previously drawn picture can be partly erased. If the picture is erased too much, the picture screen 2a can be returned to the previous picture produced before, by depressing the cancel button 20 in the menu selecting area 10c, as shown in Figure 6B.

If the user depresses the stamp button 19 in the menu selecting area 10c, several kinds of stamp characters 51 are displayed in the upper portion of the picture screen 2a of the monitor 2 as shown in Figure 7. If the user then pushes the tablet 10 at a portion corresponding to a desired one of the stamp characters 51, that character is selected as a cursor. If the user depresses the executing button 8A or 8B while lightly touching the tablet 10 with the accessory pen 11 or the like, a desired stamp character will be displayed on the picture screen at a position of the pen designated by when the executing button 8A or 8B is depressed. (The stamp character can be superimposed upon a previously drawn picture.)

As described above, in the graphic computer 1 of this embodiment, the pressure sensitive type position sensing means 23 including the tablet 10, the CPU 38, the VDP 44, the VRAM 45, and the NTSC encoder 46 or the like are formed as one body, that is in one unit, whereby the user can make the apparatus ready to draw a picture with ease simply by connecting the graphic computer 1 and the monitor 2 via the video cable 3. That is, the arrangement of the apparatus or system is simple and children can use the graphic computer with ease. Thus, the apparatus or system of this embodiment is eminently suitable for use by children to draw pictures.

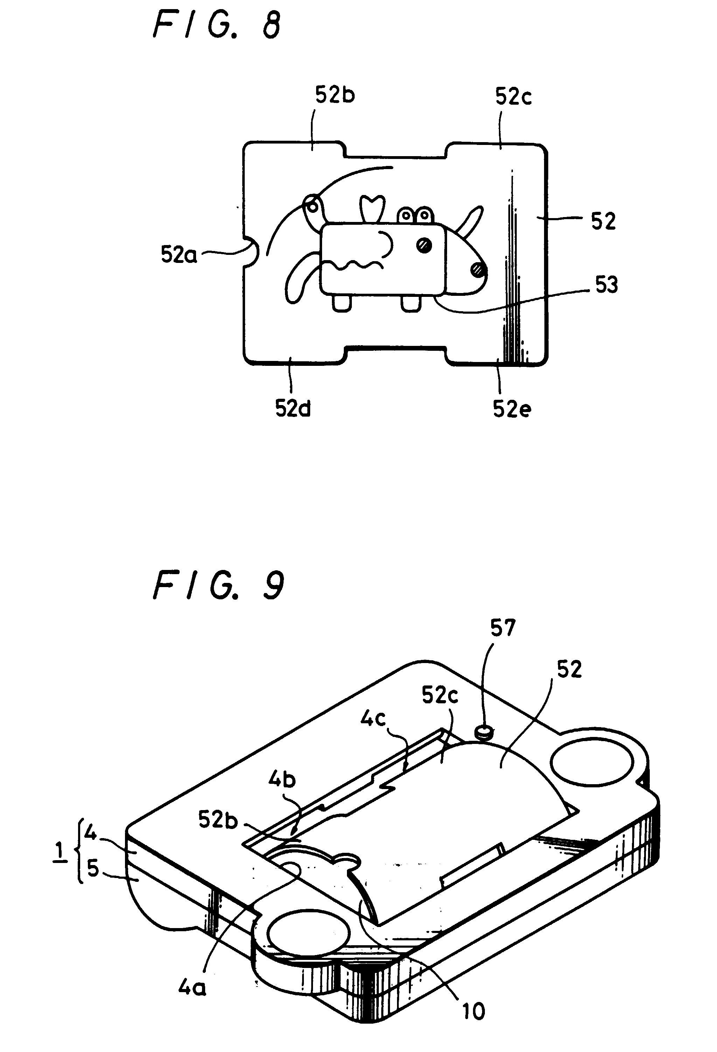

In this embodiment, a play card 52, which is a flexible sheet having a predetermined character 53 printed on one or both surfaces thereof as shown in Figure 8, can be loaded on the picture-making area 10b of the tablet 10 of the graphic computer 1. The play card 52 is substantially rectangular, and has two protruding portions (inserting portions) 52b, 52c formed on an upper side portion thereof, two protruding portions (inserting portions) 52d, 52e formed on a lower side portion thereof, and a semicircular notch 52a for ejecting the play card 52 formed on a left side portion thereof.

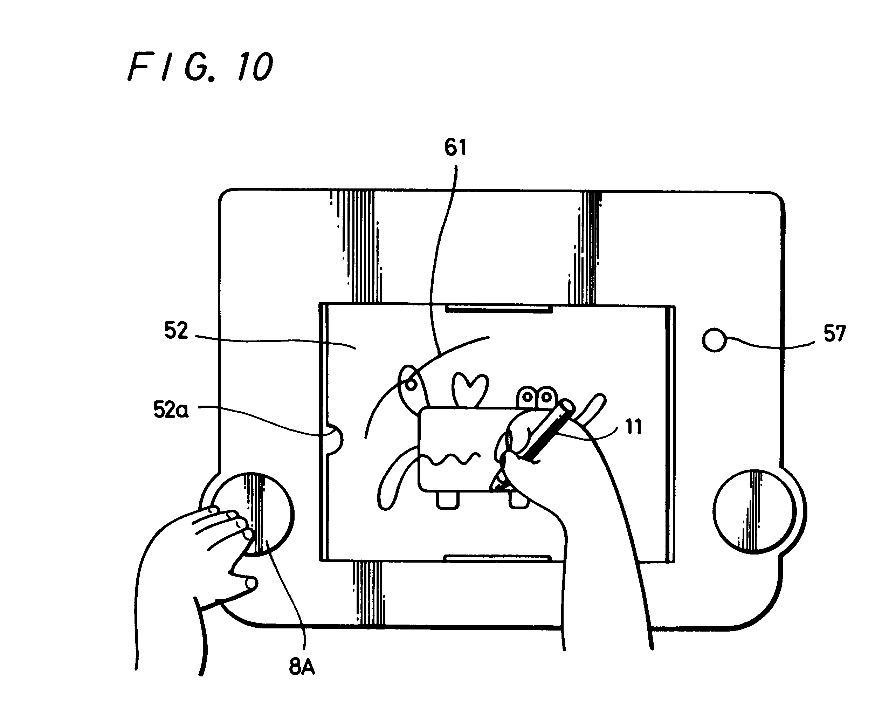

When the play card 52 is loaded on the graphic computer 1 of this embodiment, the inserting portions 52b and 52c of the upper side portion of the play card 52 are respectively inserted into the slots 4b and 4 adjacent to the tablet 10 on the upper casing in of the graphic computer 1 while the play card 52 is slightly deformed as shown in Figure 9. Then, the inserting portions 52d and 52e of the lower side portion of the play card 52 are respectively inserted into the slots 4d and 4e of the upper casing 4 (see Figure 1), whereby the play card 52 is stably loaded on the tablet 10 in a flat manner as shown in Figure 10.

The play card 52 can be used in a variety of ways, for example for tracing, sound play, playing a puzzle game or the like. If the user selects tracing, respective portions of the character 53 of the play card 52 shown in Figure 8 are marked with, for example, numerals such as 1′, 2′, 3′, .... . In one case, the user will trace the respective portions of the character 53 in the order 1′, 3′, 5′, 8′, .... . In another case, the user will trace the respective portions of the character 53 in the order 1′, 2′, 4′, 7′, ... so that, for example, respective different animal characters are displayed on the picture screen 2a of the monitor 2 in accordance with the order of tracing. In other words, a kind of hidden picture search play becomes possible.

In the case of sound play, a predetermined curve or locus 61 (Figure 10) is printed, for example, on the play card 52 in advance. If the user traces the curve 61 with a fingertip or the like after setting the graphic computer in the sound emanating mode by operating the sound button 57, a predetermined melody or the like will be produced. Further, a variant of the play card 52 may be employed in which the surface thereof is partitioned at every musical scale interval to provide areas in which the tonic solfa characters (for example) "do", "re", "mi", etc. are provided.

In the case of playing a puzzle game, words having ciphers are printed at some positions on the play card 52 and the user writes words while guessing the ciphers.

If, as described above, the play card 52 is used, the system in the example of Figure 1 can be applied, not only to picture drawing, but also to a sophisticated play or to a kind of learning. Since the play card 52 is provided with the inserting portions 52b and 52e while the slots 4b to 4e are formed on the portion in which the upper casing 4 of the graphic computer 1 contacts the tablet 10, the play card 52 can be loaded on the graphic computer with ease. Moreover, since the play card 52 is provided with the notch 52a for gripping the play card, the play card can be ejected from the graphic computer 1 with ease.

Instead of forming the grooves 4b to 4e on the upper casing 4, a leaf spring may be provided on an edge portion of the recess 4a of the upper casing 4 in order to fix a peripheral section of the play card 52. In that case, the play card need not be provided with the inserting portions 52b to 52e.

The operation of the counter 48 and the alarm circuit 49 in this embodiment will now be described. In the normal picture drawing mode, the counter 48 keeps counting the clock pulses from the CPU 38. Each time coordinate data (involving the menu selecting area 10c) are inputted via the tablet 10, or the clear button 7 or the executing button 8A or 8B is depressed, the CPU 38 causes the counter 48 to clear the count value. When the demonstration display is carried out after the graphic computer is powered up, the CPU 38 holds the condition of the counter 48 in which the count value of the counter 48 is cleared. In the normal picture drawing mode, if the user has neither touched the tablet 10 nor depressed any mechanical switch for five minutes, such as when the power switch 6 has inadvertently not been turned OFF (including the case in which the user has not carried out any operation for five minutes after completion of the demonstration display), the count value of the counter 48 reaches the value equivalent to five minutes so that the counter 48 supplies the alarm signal AL to the CPU 38.

Upon receiving the alarm signal AL, since the CPU 38 changes over the switching circuit 58 through the I/O interface circuit 41 to cause the alarm circuit 49 to perform the alarm operation whereby an alarm sound, such as a predetermined sound, melody, message etc., emanates from the speaker 50 for two minutes. Thus, the user is warned that he has inadvertently left the power switch 6 in its ON state. If the power switch 6 is not turned OFF during the time period of two minutes during which the speaker 50 emanates sound, the CPU 38 holds the condition of the counter 48 in which the count value of the counter 48 is cleared.

The graphic computer 1 of this embodiment has programmed therein a demonstration mode (shop display mode) in addition to the above-described normal mode. The demonstration mode is utilised to display the system shown in Figure 1 so that a customer can freely operate the apparatus in a shop window of the shop. To set the graphic computer in the demonstration mode, the user slides the power switch 6 to its ON-position while depressing the clear button 7. In the demonstration mode, the demonstration display begins after the graphic computer 1 is powered up. During the demonstration mode, if the user depresses the clear button 7 or the executing button 8A or 8B, or if the user inputs coordinate data via the tablet 10, the displayed picture is cleared and the graphic computer is set in the picture drawing mode, in which mode the user can draw a picture freely, similarly to the normal mode.

A program controlling the demonstration mode is so designed that, in the demonstration mode, if the user does not operate the graphic computer for five minutes (until the demonstration display is ended) after the power switch is turned ON, or if the user does not operate the graphic computer for 5 minutes during the picture drawing mode after the demonstration display is ended, the picture displayed on the picture screen 2a of the monitor 2 is cleared completely and the demonstration display is started once again. More specifically, the CPU 38, supplied with the alarm signal AL from the counter 48 when the demonstration mode is set, executes the demonstration display program once again without operating the alarm circuit 48. If the user operates the graphic computer 1 during the demonstration display mode, the picture displayed on the picture screen 2a is cleared and the graphic computer is set in the drawing mode. This means that, if the graphic computer 1 is not operated at all for five minutes after the customer freely draws a picture when the system according to the example of Figure 1 is exhibited in a shop window, the picture drawn by the customer is automatically erased and the demonstration display is started once again. Therefore, according to this demonstration mode, when the graphic computer 1 is exhibited at the shop front, the salesman need not clear the picture drawn by the customer, thus making the graphic computer easy to handle.

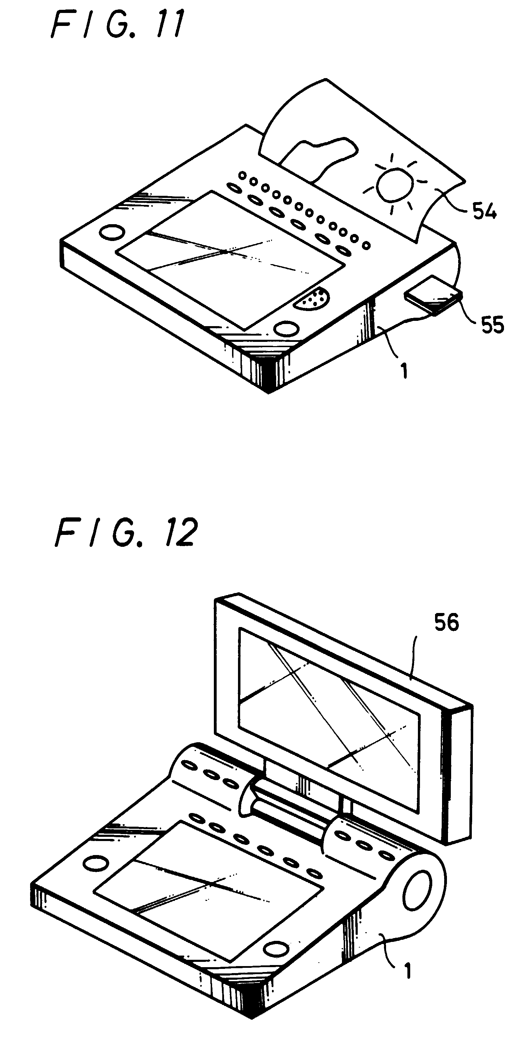

The graphic computer 1 may incorporate therein a colour or monochromatic printer (dot printer, printer-plotter, etc.) as shown in Figure 11, so that the user can print a desired picture 54 at any time. In order to complement the ROM 42 in Figure 5, an integrated circuit (IC) card in which application software is written, or a voice IC card acting as a pulse signal generator or an FM sound source, etc., may be provided in the form of an attachable/detachable card 55. Alternatively, the graphic computer may incorporate therein a disc driving apparatus for a 2 inch or 3.5 inch floppy disc.

While, in the above embodiments, the graphic computer 1 and the television monitor 2 are provided independently, the television monitor 2 may be replaced with a liquid crystal display (LCD) 56 as shown in Figure 12. The LCD 56 may be mounted on the cabinet of the graphic computer 1 so as to be freely rotatable. If the graphic computer 1 and the LCD 56 are formed unitarily in this way, the overall arrangement can be more simplified, and the graphic computer can be used more conveniently because the coordinate input section and the image display section are located close to each other. (The LCD 56 may be replaced with an electroluminescent (EL) panel.)

While, in the above-described embodiments, the composite video signal CV of the graphic computer 1 is supplied to the monitor 2 or the like, the composite video signal CV may instead or also be directly supplied to a video tape recorder or to an electronic camera, whereby the signal may be recorded on a video tape, a floppy disc or the like.

According to the embodiments of Figures 1 to 11, constituent parts of the apparatus, except for an output means, are accommodated in the same cabinet and made unitary so that the overall arrangement of the apparatus can be miniaturised. Also, the apparatus can be made ready for use merely by connecting the video signal forming means to the output means (the monitor 2) via, for example, the video cable 3, so that children can operate the graphic computer 1 with ease.

Further, since the graphic computer emanates a sound of which the musical scale (pitch) and sound volume can be changed in response to coordinates inputted to the tablet 10, the user can enjoy not only drawing a picture but also listening to the generated sound.

More specifically, since the sound volume and the musical scale are changed in response to a change of input coordinates in one axial direction and in the other axial direction, respectively, the advantage results that the user can easily play a melody or the like with stress.

## Claims

1. A portable graphic computer apparatus comprising:
(a) a tablet (10) for inputting coordinates;
(b) detecting means (23) for detecting coordinate data corresponding to coordinates inputted via the tablet (10);
(c) image data forming means (37, 38, 40) for forming image data from coordinate data detected by the detecting means;
(d) a memory (43) for storing said image data;
(e) video signal generating means (38, 44, 45, 46) for generating a video signal from said image data;
(f) a sound source (59, 60);
(g) a speaker (50) connected to the sound source (59, 60); and
(h) a cabinet (4, 5) accommodating therein at least one of the above elements from the tablet (10) to the speaker (50);
wherein the sound source (59, 60) is responsive to the detected coordinate data such that the volume of the sound generated by the sound source (59, 60) is successively changed in accordance with a change of input coordinates to the tablet (10) in one axial direction and the pitch of the sound generated by the sound source is successively changed in accordance with a change of input coordinates in another axial direction.

2. Apparatus according to claim 1, comprising a sound button (57) for selectively controlling the coordinate detecting means (23) so that the sound source (59, 60) is driven by an output signal of the coordinate detecting means (23).

3. Apparatus according to claim 2, wherein the sound button (57) is provided on the cabinet (4, 5).

4. Apparatus according to any of the preceding claims, wherein the cabinet (4, 5) comprises means (4b to 4e) for mounting a tracing sheet (52) on peripheral portions of the tablet (10) in the cabinet (4, 5).

## Patentansprüche

1. Tragbares Graphik-Computergerät mit:
a) einer Arbeitsplatte (10) zum Eingeben von Koordinaten,
b) einer Erfassungseinrichtung (23) zum Erfassen von Koordinatendaten, die den über die Arbeitsplatte (10) eingegebenen Koordinaten entsprechen,
c) einer Bilddaten-Bildeeinrichtung (37, 38, 40), um aus den mit der Erfassungseinrichtung erfaßten Koordinatendaten Bilddaten zu bilden,
d) einer Speichereinrichtung (43) zum Speichern der Bilddaten,
e) einer Videosignal-Erzeugungseinrichtung (38, 44, 45, 46), um aus den Bilddaten ein Videosignal zu erzeugen,
f) einer Tonquelle (59, 60),
g) einem Lautsprecher (50), der mit der Tonquelle (59, 60) verbunden ist, und
h) einem Gehäuse (4, 5), das zumindest eines der zuvor genannten Elemente, von Arbeitsplatte (10) bis Lautsprecher (50), beinhaltet,
wobei die Tonquelle (59, 60) auf die erfaßten Koordinatendaten reagiert, so daß die von der Tonquelle (59) erzeugte Ton-Lautstärke gemäß einer Änderung der Eingabekoordinaten auf der Arbeitsplatte (10) in einer axialen Richtung sukzessiv geändert wird und daß die von der Tonquelle erzeugte Tonhöhe sukzessiv gemäß einer Änderung der Eingabekoordinaten in einer anderen axialen Richtung geändert wird.

2. Gerät nach Anspruch 1, mit einem Ton-Knopf (57), um die Koordinaten-Erfassungseinrichtung (23) selektiv zu steuern, so daß die Tonquelle (59, 60) vom Ausgangssignal der Koordinaten-Erfassungseinrichtung (23) betrieben wird.

3. Gerät nach Anspruch 2, bei dem der Ton-Knopf (57) auf dem Gehäuse (4, 5) vorgesehen ist.

4. Gerät nach einem der vorhergehenden Ansprüche, bei dem das Gehäuse (4, 5) eine Vorrichtung (4b bis 4e) aufweist, um ein Nachführblatt (52) auf Außenabschnitten (52) der Arbeitsplatte (10) in dem Gehäuse (4, 5) zu halten.

## Revendications

1. Ordinateur graphique portable comprenant :
(a) une tablette (10) pour entrer des coordonnées ;
(b) un moyen de détection (23) pour détecter les données de coordonnées correspondant aux coordonnées entrées par l'intermédiaire de la tablette (10) ;
(c) un moyen de formation de données d'image (37, 38, 40) pour former des données d'image à partir des données de coordonnées détectées par le moyen de détection ;
(d) une mémoire (43) pour mémoriser lesdites données d'image ;
(e) un moyen générateur de signal vidéo (38, 44, 45, 46) pour produire un signal vidéo à partir desdites données d'image ;
(f) une source de son (59, 60) ;
(g) un haut-parleur (50) relié à la source de son (59, 60) ; et
(h) un coffret (4, 5) contenant à l'intérieur au moins l'un des éléments ci-dessus allant de la tablette (10) au haut-parleur (50) ;
dans lequel la source de son (59, 60) est sensible aux données de coordonnées détectées, de sorte que le volume du son produit par la source de son (59, 60) varie de manière successive en fonction d'une variation des coordonnées d'entrée sur la tablette (10) dans une direction axiale, et que la hauteur de son du son produit par la source de son varie de manière successive en fonction d'une variation des coordonnées d'entrée dans une autre direction axiale.

2. Appareil selon la revendication 1, comprenant une touche de son (57) pour commander de manière sélective le moyen de détection de coordonnées (23) pour que la source de son (59, 60) soit attaquée par un signal de sortie du moyen de détection de coordonnées (23).

3. Appareil selon la revendication 2, dans lequel la touche de son (57) est située sur le coffret (4, 5).

4. Appareil selon l'une quelconque des revendications précédentes, dans lequel le coffret (4, 5) comprend, sur les parties périphériques de la tablette (10), un moyen (4b à 4e) pour monter une feuille guide (52) dans le coffret (4, 5).
